# DEMANDE DE BREVET EUROPEEN

(11) **EP 3 846 047 A1**
(43) Date de publication de la demande: **07.07.2021**
(21) Numéro de dépôt: 20218022.0
(22) Date de dépôt: 31.12.2020
(51) Int. Cl.: G06F 16/215

(54) **PROCÉDÉ ET SYSTÈME D'IDENTIFICATION DE VARIABLES PERTINENTES**

(30) Priorité: 31.12.2019 FR 1915809
(71) Demandeur: BULL SAS, 78340 Les Clayes sous Bois (FR)
(72) Inventeur: SGHIOUER, Kaoutar, 60200 Compiègne (FR)
(74) Mandataire: Cabinet Camus Lebkiri

(57) **Abrégé**

L'invention porte sur un procédé d'identification de variables pertinentes pour un jeu de données, lesdites variables étant issues d'une pluralité de variables mise en jeu au cours d'un traitement du jeu de données, ledit procédé comprenant :
- une étape de génération d'un sous ensemble de variables à partir de la pluralité de variables,
- une étape d'attribution d'une valeur de quantification de chaque variable du sous ensemble de variables généré,
- une étape de sélection de variable pertinente,
- une nouvelle étape de génération d'un nouveau sous ensemble de variables lorsque la valeur quantitative de la variable sélectionnée est inférieure à une valeur seuil prédéterminée.

## Description

L'invention concerne le domaine de l'analyse des données, et plus particulièrement l'identification de variables pour un jeu de données, pouvant être utilisés notamment par la suite pour des phases de modélisation ou d'exploitation avancées des données. L'invention concerne un procédé d'identification de variables pertinentes pour un jeu de données ainsi qu'un système d'identification de variables pertinentes pour un jeu de données. L'invention se rapporte également à un module de sélection de variable pour l'identification de variables pertinentes pour un jeu de données.

### [Art antérieur]

Avec l'expansion des activités liées au Big Data, le métier de Data Scientist s'est développé de façon importante ces dernières années. Ce métier, qui a pour objet de tirer profit des grandes quantités de données disponibles dans les sociétés et les grandes organisations, s'appuie sur des techniques statistiques et des outils informatiques variés, mais reste aujourd'hui largement « artisanal ». Chaque organisation et chaque jeu de données posent des problèmes spécifiques auxquels les Data Scientists tentent de répondre par des solutions « sur mesure ».

Cet état de choses est notamment dû à la très grande hétérogénéité des données disponibles, à leur caractère souvent incomplet ainsi qu'aux erreurs et incohérences contenues dans presque tous les jeux de données de taille significative. Afin de prendre en compte ces aspects, les Data Scientists, avant de rentrer dans des phases de modélisation et d'exploitation avancée des données, doivent d'abord passer par une phase de prétraitement et d'analyse préliminaire de ces dernières (nettoyage, analyse exploratoire). Ces tâches s'avèrent cependant extrêmement lourdes et chronophages. Ainsi, comme le souligne l'étude menée par Forbes en 2016 et relayée dans l'article de G. PRESS, le Data Scientist passe 80% de son temps dans ce processus de prétraitement et d'analyse des données et 20% seulement dans l'algorithmique pure.

La phase de prétraitement et d'analyse préliminaire de données, représente une part considérable du travail des Data Scientists, qui repose aujourd'hui essentiellement sur la mise en œuvre non automatisée et/ou systématisée de différents outils, et sans cadre fédérateur pour une comparaison aisée et pertinente des résultats obtenus sur un jeu de données suite à l'application de différentes techniques d'analyse.

En 2011, les travaux de S. KANDEL et al. ont donné lieu au développement de l'outil Wrangler, puis à la création de la société Trifacta qui développe un outil de prétraitement performant [KANDEL, 2011]. Néanmoins, cet outil permet uniquement de faciliter les traitements de type textuels (utilisation d'expressions régulières par exemple) ; exploiter les données issues des bases de données (éclatements, regroupements de colonnes, etc.) ; analyser syntaxiquement les messages.

Il est d'ailleurs comparé et évalué en termes de temps par rapport aux mêmes traitements effectués par Excel. De fait, il s'agit là uniquement d'un outil permettant de prétraiter des données brutes mais qui n'est aucunement capable d'effectuer des statistiques sur les données traitées. Précisément pour cette raison, les auteurs concluent dans leurs perspectives l'intérêt d'inclure d'autres techniques d'analyse, dont des techniques statistiques.

Le programme open source OpenRefine, développé par Google est notamment décrit par R. Verborgh et M. De Wilde [VERBORGH, 2013]. Cependant, il s'agit d'un outil permettant de traiter des données désordonnées, dans le but de les nettoyer et de les convertir d'un format à un autre. Dans ce cas également, l'outil ne réalise aucune analyse statistique des données injectées.

Le langage R permet de réaliser des calculs statistiques et également de développer des applications de Machine Learning. Il intègre de nombreux modules qui permettent au Data Scientist de réaliser facilement ce type de traitements ainsi que des prétraitements sur les données. Il permet ainsi : la manipulation des données, via de nombreuses bibliothèques de manipulation de données ; la visualisation de données, technique implémentée dans l'outil ggplot2 par exemple présenté par W. HADLEY [HADLEY, 2016]. Celui-ci permet de construire un ensemble d'objets géométriques » (« geoms ») à partir d'un jeu de données restreint. Cependant, il n'existe pas d'interface simple d'utilisation autre que le langage de programmation lui-même, rapide et accessible permettant à n'importe quel utilisateur maîtrisant ou non le langage informatique de mettre en œuvre de techniques d'apprentissage supervisé ou non supervisé.

Comme le langage R, le langage Python est très répandu dans le monde scientifique et dispose de librairies dédiées à l'analyse de données, notamment : Pandas , qui facilite la manipulation de données, par le biais de structures de données adaptées et d'opérations de nettoyage, de formatage ou d'autres prétraitements [MCKINNEY, 2011]; Scikit-learn (parfois abrégé sklearn), qui fournit différents algorithmes de classification, régression et partitionnement (en anglais, clustering) pour l'analyse statistique [PEDREGOSA, 2011].

Toutefois, selon les valeurs à traiter, les algorithmes ne se comportent pas de la même manière et cela influe sur le résultat qu'ils retournent. Lorsque plusieurs méthodes d'estimation sont a *priori* pertinentes, il n'est donc pas garanti qu'elles fournissent le même résultat. De ce point de vue, il paraitrait utile de disposer de méthodes ou d'outils permettant de comparer la pertinence des résultats des tests de chaque méthode.

Comme cela a été mentionné, l'apprentissage automatisé constitue une part majeure de la quatrième révolution industrielle. Ainsi, les processus industriels sont de plus en plus fréquemment améliorés via une intégration d'intelligence artificielle ou plus spécifique de modèles d'apprentissages automatisés capables de répondre à des problèmes techniques aussi variés qu'il y a de processus industriels.

En particulier, l'apprentissage automatisé se base sur une multitude de données pouvant provenir de plusieurs sources différentes et pouvant présenter ainsi une forte hétérogénéité. Ainsi, avec les méthodes de l'art antérieur, il est fréquent qu'une équipe de data scientistes soit formée au traitement des données et mette en place des processus de traitement de données. Néanmoins, lorsque des sources des données sont diverses et varient dans le temps les méthodes de l'art antérieur ne sont pas réactives et peuvent causer des arrêts d'exploitation des processus industriels. En effet, lorsque l'apprentissage automatisé est utilisé pour le contrôle de processus industriel, un prétraitement non adapté de cette multitude de source de données peut entrainer une diminution de la réactivité des processus de contrôle ou pire un manque de sensibilité.

La conclusion globale est le constat du manque d'outils capables de réaliser les tâches de prétraitement et d'analyse de manière automatisée/systématisée. En effet, les outils de l'art antérieur se limitent à des prétraitements très basiques des données (formatage, ajouts de colonnes, etc.), sans se préoccuper de l'analyse qui en découle, rendant leur utilisation chronophage. En outre, il apparait ainsi utile de disposer d'un outil permettant lors de l'analyse d'identifier les variables les plus pertinentes pour un jeu de données. Il est donc nécessaire de développer des procédés et des systèmes moins chronophages que ceux existant, plus simple d'utilisation et automatisé et/ou systématisé et pouvant supporter une grande quantité de données ainsi que des données hétérogènes.

En effet, il existe un risque qu'un même jeu de données puisse être interprété différemment par plusieurs techniques, qui fournissent alors des résultats divergents, lorsque son degré de complexité d'analyse augmente. Cette complexité d'analyse peut être due : à la volumétrie du jeu de données ; aux échantillons issus d'une même population pouvant être aléatoires ou manquants ; à des erreurs ou des incohérences contenues. Il devient alors indispensable de pouvoir juger de la pertinence des résultats fournis par les techniques d'analyses suite à leur application sur le jeu de données.

Cependant, dans le cadre de l'utilisation de modèles prédictifs entrainés via des techniques d'apprentissage, l'apparition de nouvelles variables ou encore le changement de variables, au cours du temps, non prises en compte par le modèle prédictif utilisé, rend bien souvent le modèle de prédiction obsolète. En effet, le modèle prédictif sélectionné étant basé sur des lois de probabilité permettant d'interpréter un jeu de données, l'ajout, la suppression ou le changement de variables, non prises en compte par le modèle de prédiction nécessite bien souvent une refonte du modèle de prédiction qui s'avère chronophage. Un modèle de prédiction n'étant plus adapté ne permettra donc pas d'anticiper l'apparition d'anomalies, telles que notamment des pannes ou des besoins en ressources dans le cadre de la maintenance prédictive d'infrastructures informatiques telles que des systèmes de calculs Haute-performance. La considération de données en tant que valeurs aberrantes ou bien caractéristiques d'une anomalie dans un jeu de données en lien avec une interprétation erronée du jeu de données dans le domaine de la cyber sécurité ou plus généralement de la surveillance, est particulièrement importante puisqu'elle permet la détection d'attaques ou de fraudes. Or, aucune solution existante ne permet de comparer directement, et simultanément, les résultats de corrélation des jeux de données selon plusieurs techniques d'analyse. De même, actuellement, il n'existe pas de solution proposant de traiter automatiquement les jeux de données, notamment dans le cadre d'une application à des processus industriels, et de fournir à l'utilisateur la méthode implémentée la plus à-même d'interpréter le jeu de données et de corréler les variables. Il incombe donc à l'utilisateur d'analyser l'ensemble des résultats fournis par les différentes méthodes pour en tirer des conclusions et choisir l'interprétation lui semblant le plus correspondre au jeu de données étudié.

Enfin, les solutions de l'état de l'art sont peu accessibles, en s'inscrivant dans une logique « boîte noire ». Elles s'adressent prioritairement à des experts en Data Science, que ce soit : pour la réalisation de l'ensemble des étapes de prétraitement, ou pour l'interprétation/la compréhension des résultats obtenus suite aux tests de corrélation. Les outils n'expliquent donc pas à l'utilisateur pourquoi la corrélation entre une méthode d'analyse et un jeu de données a réussi ou échoué. Par ailleurs, certains outils nécessitent de connaître/maîtriser la programmation et les langages informatiques pour être manipulés.

### [Problème technique]

L'invention a donc pour but de remédier aux inconvénients de l'art antérieur. En particulier, l'invention a pour but de proposer un procédé d'identification de variables pertinentes pour un jeu de données, ledit procédé étant rapide et simple à mettre en œuvre, avec un nombre réduit d'étapes, permettant de maitriser la fiabilité et la pertinence des variables sélectionnées tout en étant simple d'utilisation, automatisé, systématisé et permettant une application aisée à tout processus industriel. Ledit procédé est également accessible pour n'importe quel utilisateur tout en étant apte à supporter une grande quantité de données dont lesdites données peuvent être hétérogènes. En outre, il est particulièrement adapté à la surveillance de processus industriels et plus particulièrement de système d'information.

L'invention a en outre pour but de proposer un système d'identification de variables pertinentes pour un jeu de données, ledit système étant simple et rapide d'utilisation. En outre, le système selon l'invention est accessible et capable de traiter un volume important de données. Le système selon l'invention permet également de maîtriser la fiabilité et la pertinence des variables sélectionnées.

### [Brève description de l'invention]

A cet effet, l'invention porte sur **un procédé d'identification de variables pertinentes** dans un jeu de données comportant une pluralité de sous-ensembles de données mis en œuvre par un dispositif informatique, chacun des sous-ensembles de données correspondant à une variable de façon à former un ensemble de variables, ledit procédé comprenant :
- une étape de génération d'un sous ensemble de variables à partir de l'ensemble de variables, par un module de sélection de variable,
- une étape de calcul d'une valeur de performance à chaque variable du sous ensemble de variables généré, par le module de sélection de variables,
- une étape de sélection d'au moins une variable pertinente par application d'un algorithme génétique, ou par application de techniques de sélection, et
- une nouvelle étape de génération d'un nouveau sous ensemble de variables lorsque la valeur de performance de la variable sélectionnée est inférieure à une valeur seuil prédéterminée.

Un tel procédé d'identification de variables pertinentes permet de maitriser la fiabilité et la pertinence des variables sélectionnées et est tel qu'il peut avantageusement être automatisé, systématisé et de façon à être appliqué à tout processus industriel. En outre, capable de supporter une grande quantité de données pouvant être hétérogènes, il est particulièrement adapté à la surveillance de processus industriels et plus particulièrement de système d'information.

**Selon d'autres caractéristiques optionnelles du procédé, ce dernier peut inclure facultativement une ou plusieurs des caractéristiques suivantes, seules ou en combinaison :**
- l'étape de génération d'un sous ensemble de variables comprend une étape préalable de réception de la pluralité de variables formant un espace de représentation en fonction d'une requête déterminée.
- il comprend une étape de vérification de la pertinence de variables identifiées, par le module de sélection de variable, comprenant l'affectation d'indicateurs de performances.
- l'étape de vérification comprend en outre la comparaison des indicateurs de performances affectés aux variables identifiées avec des indicateurs de performances définis.
- l'étape de sélection d'au moins une variable par application d'un algorithme génétique comprend :
   - une étape de calcul d'une valeur d'adéquation pour chaque variable du sous ensemble de variable généré,
   - une étape de génération d'une nouvelle variable comprenant :
      - une étape de sélection de variable à partir d'une fonction de sélection prédéfinie,
      - une étape de transformation des variables sélectionnées en fonction d'une fonction de transformation prédéfinies,
   - une étape de calcul d'une valeur d'adéquation pour la nouvelle variable générée,
   - une étape de comparaison de la valeur d'adéquation de la nouvelle variable générée avec les valeurs d'adéquation de chaque variable du sous ensemble de variable généré comprenant :
      - une nouvelle étape de génération d'un nouveau sous ensemble de variables lorsque la valeur quantitative de la variable sélectionnée est inférieure à une valeur seuil prédéterminée, ladite valeur quantitative correspondant à la valeur d'adéquation de la nouvelle variable générée et la valeur seuil prédéterminée correspondant à la valeur d'adéquation la plus faible des variables du sous ensemble généré.
- l'étape de sélection d'au moins une variable par application d'un algorithme génétique comprend au préalable :
   - une étape de calcul de corrélation entre les variables du sous ensemble de variable généré,
   - une étape d'encodage des variables en fonction de la corrélation calculée entre les variables du sous ensemble de variables générées.
- l'étape de sélection de variables par application de techniques de sélection comprend :
   - la sélection de variable univariée, ou
   - la sélection de variable multivariée, ou
   - la sélection de variable par élimination récursive.
- il comprend une étape de suppression des variables du sous ensemble de variable généré lorsque les variables sont redondantes.
- l'étape d'attribution d'une valeur de performance de chaque variable du sous ensemble de variables généré, par le module de sélection de variables, comprend la classification des variables à partir de la valeur de performance.
- le jeu de données est émis par des fournisseurs de données comportant des capteurs de production industrielle et la variable pertinente sélectionnée est utilisée par un modèle d'apprentissage entrainé pour la surveillance d'un processus industriel.
- les capteurs de production industrielle comportent : des objets connectés, des capteurs machines, capteurs d'environnement et/ ou des sondes informatiques.
- le processus industriel est sélectionné parmi : un processus de production agroalimentaire, un processus de production manufacturière, un processus de synthèse chimique, un processus de conditionnement ou un processus de surveillance d'une infrastructure informatique.
- la surveillance du processus industriel correspond à la surveillance de la sécurité du processus industriel et comporte en particulier une maintenance prédictive, une détection de défaillance, une détection de fraude, et/ou une détection de cyberattaque.

L'invention porte en outre sur **un système d'identification de variables pertinentes** pour un jeu de données, mis en œuvre par un dispositif informatique, lesdites variables étant issues d'une pluralité de variables mise en jeu au cours d'un traitement du jeu de données, ledit système comprenant un module de sélection de variable configuré pour :
- Générer un sous ensemble de variables à partir de la pluralité de variables mis en jeu au cours du traitement du jeu de données,
- Attribuer une valeur de quantification de chaque variable du sous ensemble de variables généré,
- Sélectionner des variables pertinentes par application d'un algorithme génétique, ou par application de techniques de sélection,
- Générer un nouveau sous ensemble de variables lorsque la valeur quantitative de la variable sélectionnée est inférieure à une valeur seuil prédéterminée.

L'invention porte également sur **un module de sélection de variables pertinentes** pour l'identification de variables pertinentes pour un jeu de données, mis en œuvre par un dispositif informatique, lesdites variables étant issues d'une pluralité de variables mise en jeu au cours d'un traitement du jeu de données, ledit module de sélection de variable étant configuré pour :
- Générer un sous ensemble de variables à partir de la pluralité de variables mis en jeu au cours du traitement du jeu de données,
- Attribuer une valeur de quantification de chaque variable du sous ensemble de variables généré,
- Sélectionner des variables pertinentes par application d'un algorithme génétique, ou par application de techniques de sélection,
- Générer un nouveau sous ensemble de variables lorsque la valeur quantitative de la variable sélectionnée est inférieure à une valeur seuil prédéterminée.

L'invention porte en outre sur un **programme d'identification de variables pertinentes** pour un jeu de données mis en œuvre par un dispositif informatique, comprenant des instructions qui lorsqu'elles sont exécutées par le dispositif informatique provoque la mise en œuvre d'un procédé selon l'invention.

L'invention porte également sur un **support d'enregistrement** sur lequel est enregistré le programme d'identification de variables pertinentes selon l'invention.

D'autres avantages et caractéristiques de l'invention apparaitront à la lecture de la description suivante donnée à titre d'exemple illustratif et non limitatif, en référence aux Figures annexées :
Figure 1 représente un schéma d'un mode de réalisation du procédé selon l'invention.
Figure 2 représente un schéma d'un mode de réalisation du procédé selon l'invention.

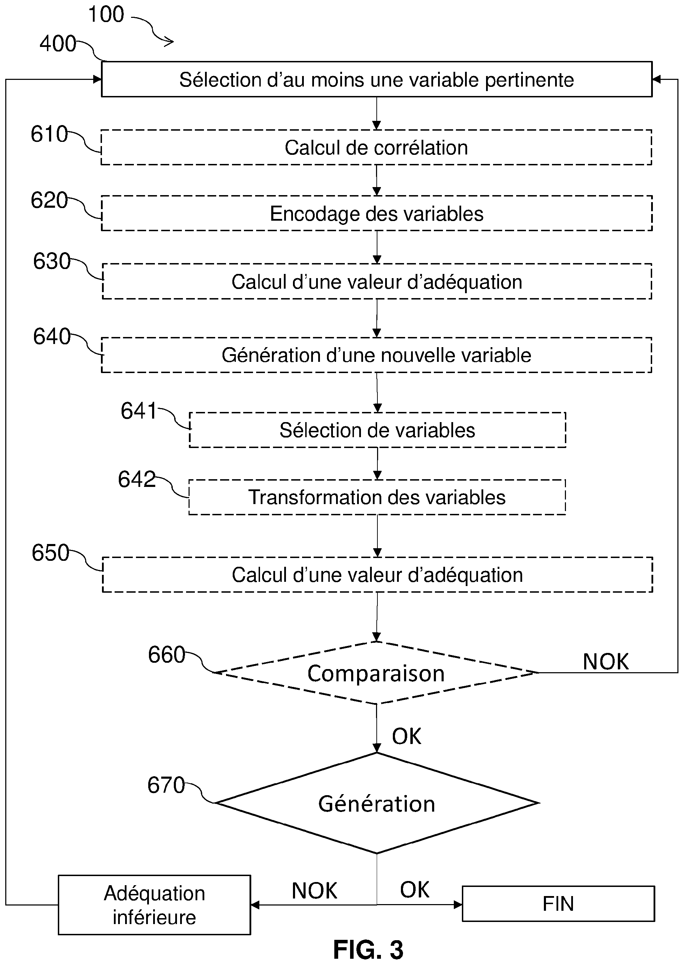

Figure 3 représente un schéma d'un mode de réalisation d'une étape du procédé selon l'invention.

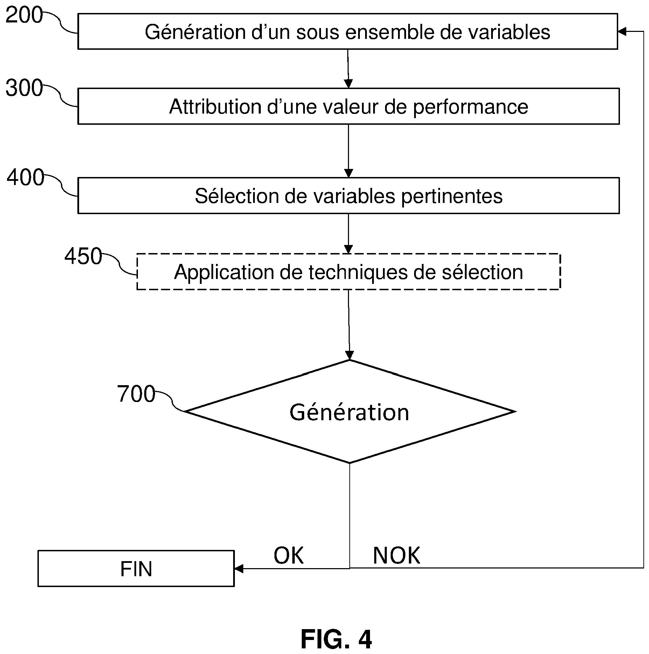

Figure 4 représente un schéma d'un mode de réalisation du procédé selon l'invention.

### [Description de l'invention]

Le terme « **modèle** » ou « **règle** » ou « **algorithme** » **ou « modèle d'apprentissage automatique** » au sens de l'invention peut par exemple correspondre à une suite finie d'opérations ou d'instructions permettant de calculer une valeur par l'intermédiaire d'un classement ou d'un partitionnement des données au sein de groupes préalablement définis Y et d'attribuer un score ou de hiérarchiser une ou plusieurs données au sein d'un classement. La mise en œuvre de cette suite finie d'opérations permet par exemple d'attribuer une étiquette Y à une observation décrite par un ensemble de caractéristiques ou paramètres X grâce par exemple à la mise en œuvre d'une fonction f susceptible, de reproduire Y ayant observé X. Y = f (X) + e où e symbolise le bruit ou erreur de mesure.

On entend par « **traiter** », « **calculer** », « **déterminer** », « **afficher** », « **extraire** » « **comparer** » ou plus largement « **opération exécutable** » au sens de l'invention, une action effectuée par un dispositif ou un processeur sauf si le contexte indique autrement. À cet égard, les opérations se rapportent à des actions et/ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

On entend par « **seuil prédéterminé** » au sens de l'invention une valeur maximale de paramètre associée à chaque ressource permettant un bon fonctionnement de ladite ressource. Par exemple, cela correspond aux limites maximales acceptables de consommations de ressources pour une infrastructure informatique hébergeant une ou plusieurs briques applicatives. Ces limites peuvent être réelles ou hypothétiques et correspondent généralement à un niveau d'utilisation au-delà duquel des dysfonctionnements peuvent survenir et ayant pour conséquence un arrêt de la ressource, de l'infrastructure informatique ou bien à tout le moins des baisses de qualités de service. Par exemple, le tableau 1 ci-dessous présente les seuils prédéterminés d'utilisation maximum pour trois ressources

**[Tableau 1]**

| | CPU 1 | Utilisation réseau | Utilisation disque |
|---|---|---|---|
| Seuil prédéterminé | 80% | 350 KBps | 60 o/s |

Par « **règles d'exécution** » on entend au sens de l'invention des paramètres prédéterminés d'exécution d'un plan d'ordonnancement dont le respect permet une exécution répondant aux besoins de l'administrateur SI. Ces règles peuvent notamment inclure des ordres d'enchainement à respecter, des horaires à respecter, ou des seuils de consommation en ressources à respecter, des fonctions prédéterminées à utiliser.

Par « **variable** » on entend au sens de l'invention une caractéristique d'une unité statistique que l'on observe et pour laquelle une valeur numérique ou une catégorie d'une classification peut être attribuée.

On entend par « **dispositif informatique** » tout dispositif informatique ou toute infrastructure informatique comprenant une ou plusieurs ressources matérielles et/ou logicielles configurées pour envoyer et/ou recevoir des flux de données et pour les traiter. Le dispositif informatique peut être un serveur informatique.
On entend par « **Fournisseurs de données** », tout capteurs (tels que des capteurs de production industrielle), sondes (telles que des sondes informatiques) ou programmes informatiques capables de générer des données de suivi de processus industriels. Ils peuvent aussi correspondre à des dispositifs informatiques tels que des serveurs gérant les données générées par des capteurs, des sondes ou des programmes informatiques.

Par « **techniques de sélection** » on entend au sens de l'invention une suite finie d'opérations ou d'instructions permettant de calculer une valeur par l'intermédiaire de tests statistiques de type ANOVE, Test de l'information mutuelle entre deux variables aléatoires, Test du Chi², Tests de régression (e.g. régression linéaire, information mutuelle), SVM, ou élimination récursive, et permettant d'aboutir à un ensemble comprenant des variables pertinentes, notamment les meilleures variables ou les variables les plus pertinentes.

L'expression « **passage en anomalie** » au sens de l'invention, peut correspondre à un instant où une métrique ou une pluralité de métriques (liées entre elles ou non) présentent un risque ou un résultat obtenu par calcul, de dépassement d'un seuil prédéterminé ou indicatif d'un risque de défaillance ou d'incident technique sur l'infrastructure informatique.

L'expression « **incident technique** » ou le terme « **défaillance** » au sens de l'invention, correspondent à un ralentissement ou un arrêt de fonctionnement d'une partie au moins de l'infrastructure informatique et de ses applications. Un incident technique peut être causé par une erreur réseau, un échec de processus ou encore une défaillance d'une partie du système.

L'expression « **infrastructure informatique** » au sens de l'invention correspond à un ensemble de structures informatiques (i.e. dispositifs informatiques) apte à faire fonctionner une application ou une chaine applicative. L'infrastructure informatique peut être un ou plusieurs serveurs, ordinateurs, ou encore contrôleurs industriels. Ainsi, l'infrastructure informatique peut correspondre à un ensemble de d'éléments comportant un processeur, une interface de communication et de la mémoire.

Par « **sonde** » ou « **sonde informatique** », on entend au sens de l'invention un dispositif, logiciel ou processus associé à un équipement qui permet d'effectuer, de gérer et/ou de faire remonter vers un équipement informatique des mesures des valeurs d'indicateurs de performance tels que des paramètres d'un système. Cela peut correspondre au sens large à des valeurs sur l'utilisation de ressources, des valeurs de paramètres d'exécution d'applications ou encore des valeurs de l'état de fonctionnement des ressources. Une sonde selon l'invention englobe donc également les logiciels ou processus capable de générer des journaux applicatifs ou des historiques des événements (« log file » en terminologie anglosaxonne). En outre, les sondes peuvent aussi correspondre à des capteurs physiques tels que des capteurs de température, d'humidité, de fuites d'eau, de consommation électrique, de mouvement, d'air conditionné, et de fumée.

L'expression « **indicateur de performance** » ou « métrique » au sens de l'invention, correspond à une propriété technique ou fonctionnelle d'un ou de plusieurs éléments d'une infrastructure informatique ou de son environnement représentant les conditions ou l'état de fonctionnement de ladite infrastructure informatique. En outre, un indicateur de performance peut correspondre à une combinaison de propriétés ou à des transformations mathématiques de propriétés. Par exemple, un indicateur de performance peut correspondre à la dérivée d'une propriété d'un élément de l'infrastructure informatique ou bien à un rapport entre les propriétés de deux éléments de l'infrastructure informatique.

L'expression « **valeur de l'indicateur de performance** » ou « valeur de la métrique » au sens de l'invention, correspond à une valeur de mesure ou de calcul d'une propriété technique ou fonctionnelle d'un ou de plusieurs éléments d'une infrastructure informatique représentant l'état de fonctionnement de ladite infrastructure informatique.

Le terme « **ressource** » au sens de l'invention correspond à des paramètres, des capacités ou des fonctions de dispositifs informatiques permettant le fonctionnement d'un système ou d'un processus applicatif. Un même dispositif informatique est associé généralement à plusieurs ressources. De même, une même ressource peut être partagée entre plusieurs processus applicatifs. Une ressource est généralement associée à un identifiant unique permettant de l'identifier au sein d'une infrastructure informatique. Par exemple, le terme « ressource » peut inclure : des disques réseaux caractérisés par des indicateurs de performance tels que par exemple par leurs entrées/sorties, la lecture/écriture sur des disques, des mémoires caractérisées par un indicateur de performance tel que le taux d'utilisation, un réseau caractérisé par sa bande passante, un processeur caractérisé par exemple par son utilisation (en pourcent) ou le taux d'occupation de ses caches, une mémoire vive caractérisée par la quantité allouée. On entend par « **utilisation des ressources** », la consommation d'une ressource par exemple par une application métier.

Le terme « **apprentissage** » au sens de l'invention correspond à un procédé conçu pour définir une fonction f permettant de calculer une valeur de Y à partir d'une base de n observations labelisées (X1...n, Y1...n) ou non labelisées (X1...n). L'apprentissage peut être dit supervisé lorsqu'il se base sur des observations labelisées et non supervisé lorsqu'il se base sur des observations non labelisées. Dans le cadre de la présente invention, l'apprentissage est avantageusement utilisé pour la calibration du procédé et donc son adaptation à une infrastructure informatique particulière.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

L'expression « **objet connecté** » au sens de l'invention, correspond à un objet électronique connecté, par une connexion filaire ou sans fil, à un réseau de transport de données, de manière que l'objet connecté puisse partager des données avec un autre objet connecté, un serveur, un ordinateur fixe ou mobile, une tablette électronique, un smartphone ou tout autre dispositif connecté d'un réseau donné. De manière connue en soi, de tels objets connectés peuvent être, par exemple, des tablettes, des dispositifs d'éclairage intelligents, des outils industriels ou encore des smartphones.

L'expression « **capteurs de production industrielle** » au sens de l'invention peut correspondre à des objets connectés. Les capteurs de production industrielle pourront en particulier correspondre à des capteurs machines, dédié à la mesure de données relative à des machines, de préférence des machines de production telles que des machines industrielles. Ainsi, les capteurs de production industrielles pourront générer des données exprimées en vitesse (e.g. tours par minute), cadence, poids ou tout autres unités utiles dans un contexte industriel. Les capteurs de production industrielle pourront aussi correspondre à des capteurs d'environnement capables par exemple de mesure la température, la pression l'humidité. Les capteurs de production industrielle pourront en particulier correspondre à des sondes informatiques.

L'expression « **processus industriels** » au sens de l'invention peut correspondre à un processus de production de biens de consommation pouvant par exemple être des objets électroniques, des objets mécaniques, des aliments, ou encore substances pharmaceutiques ou phytopharmaceutiques. En outre, un processus industriel pourra être contrôlé par l'intermédiaire d'une infrastructure informatique. Ainsi une surveillance d'un processus industriel pourra correspondre à la surveillance d'une infrastructure informatique.

Dans la suite de la description, les mêmes références sont utilisées pour désigner les mêmes éléments.

Comme cela a été mentionné, l'apprentissage automatisé constitue une part majeure de la quatrième révolution industrielle. Ainsi, les processus industriels sont de plus en plus fréquemment améliorés, via une intégration d'intelligence artificielle ou plus spécifique de modèles d'apprentissages automatisés capables de répondre à des problèmes techniques aussi variés qu'il y a de processus industriels.

En particulier, l'apprentissage automatisé se base sur une multitude de données pouvant provenir de plusieurs sources différentes et pouvant présenter ainsi une forte hétérogénéité. Ainsi, avec les méthodes de l'art antérieur, il est fréquent qu'une équipe de data scientistes soit formée au traitement des données et mette en place des processus de traitement de données. Une fois ces données traitées, elles permettent l'entrainement d'un modèle d'apprentissage. Néanmoins, lorsque des sources des données sont diverses et varient dans le temps les méthodes de l'art antérieur ne sont pas réactives et peuvent causer des arrêts d'exploitation des processus industriels. En effet, lorsque l'apprentissage automatisé est utilisé pour le contrôle de processus industriel, il convient de sélectionner les variables les plus pertinentes pour permettre au modèle d'apprentissage de fournir une prédiction pertinente et ainsi éviter d'influer négativement sur la réactivité des processus de contrôle ou pire un manque de sensibilité.

Cela peut engendrer des risques pour les processus industriels contrôlés mais également pour les personnes travaillant au contact de ces processus industriels. Pour éviter ces problèmes techniques d'arrêt d'exploitation des processus industriels, les inventeurs ont développé de nouveaux processus automatisés pour l'analyse en continue d'un jeu de données comprenant une pluralité de sous-ensembles de données du système informatique utilisé.

En particulier, comme cela sera détaillé par la suite, les inventeurs ont développé un système et un procédé d'identification de variables pertinentes dans un jeu de données comportant une pluralité de sous-ensembles de données. Avantageusement, un système et un procédé d'identification de variables pertinentes selon l'invention permettront de d'évaluer constamment les variables pertinentes utilisées, les adapter ou remplacer par des variables plus pertinentes dans un contexte industriel particulier.

En effet, au sein d'un système complexe (par exemple un processus industriel, un ensemble de serveurs, d'applications ou d'équipements au sein d'un centre de données), certaines anomalies peuvent causer de graves problèmes d'exploitation par exemple par un effet de cascade. Or, il est nécessaire de pouvoir disposer de variables sélectionnées toujours adaptées, afin d'éviter une dégradation de la prédiction d'un modèle d'apprentissage empêchant la détection de l'apparition future de pannes ou d'anomalies.

L'invention porte donc sur un **procédé 100 d'identification de variables pertinentes dans un jeu de données.** Le jeu de données pourra en particulier être mis en œuvre au sein d'un modèle d'apprentissage automatique pouvant être utilisé pour la surveillance d'un processus industriel.

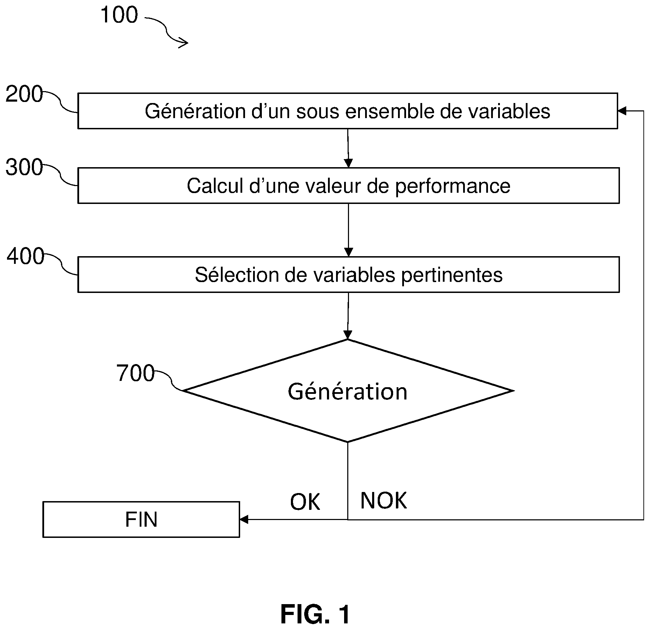

En particulier, comme cela est illustré à la figure 1 et comme cela sera décrit par la suite, le procédé 100 d'identification de variables pertinentes dans un jeu de données peut être mis en œuvre par un système d'identification de variables pertinentes pour un jeu de données comprenant un dispositif informatique comportant un module de sélection de variables.

Plus particulièrement un tel procédé est mis en œuvre à partir d'un jeu de données adapté pour son utilisation dans le cadre de la génération d'un modèle de prédiction.

De plus, le procédé 100 d'identification de variables pertinentes dans un jeu de données pourra recevoir (en réponse à une requête par exemple) en continue un jeu de données, de préférence prétraitées, afin de déterminer un sous-ensemble de variables pertinent pour entraîner un modèle d'apprentissage automatique pour la surveillance d'un processus industriel. De façon préférée, dans le cadre d'un procédé selon l'invention, la transmission du jeu de données, de préférence prétraitées, pour l'identification de variables se fait en temps réel.

En outre, dans le cadre d'un procédé selon l'invention, l'évaluation de la performance des variables du sous-ensemble de variables d'un jeu de données est de préférence réalisée en continu. L'évaluation en continu correspond par exemple à des mesures ou des traitements réalisés à une fréquence inférieure ou égale à une heure, de préférence inférieure ou égale à trente minutes, de façon plus préférée inférieure ou égale à cinq minutes, par exemple inférieure ou égale à dix secondes.

Ainsi, le système d'identification de variables pertinentes pour un jeu de données peut comprendre l'identification de variables pertinentes dans un jeu de données qui permettra grâce au procédé selon l'invention de prendre en compte et de modifier de manière dynamique les variables pertinentes pour l'établissement d'un modèle de prédiction.

En effet, un procédé 100 d'identification de variables pertinentes dans un jeu de données comportant une pluralité de sous-ensembles de données est avantageusement mis en œuvre par un dispositif informatique comprenant un module de sélection de variable.

Le module de sélection de variable est compris dans un dispositif informatique qui pourra avantageusement être adapté pour s'intégrer à un système de calculateurs hautes performances ou plus généralement à tout système configuré pour générer un jeu de données adapté comportant des variables permettant d'interpréter le comportement d'une architecture informatique et notamment de générer un modèle de prédiction.

Ainsi, un procédé 100 d'identification de variables pertinentes dans un jeu de données conforme à l'invention comporte les étapes de génération 200 d'un sous ensemble de variables, de calcul 300 d'une valeur de performance, de sélection 400 d'au moins une variable pertinente et de génération 700 d'un nouveau sous ensemble de variables.

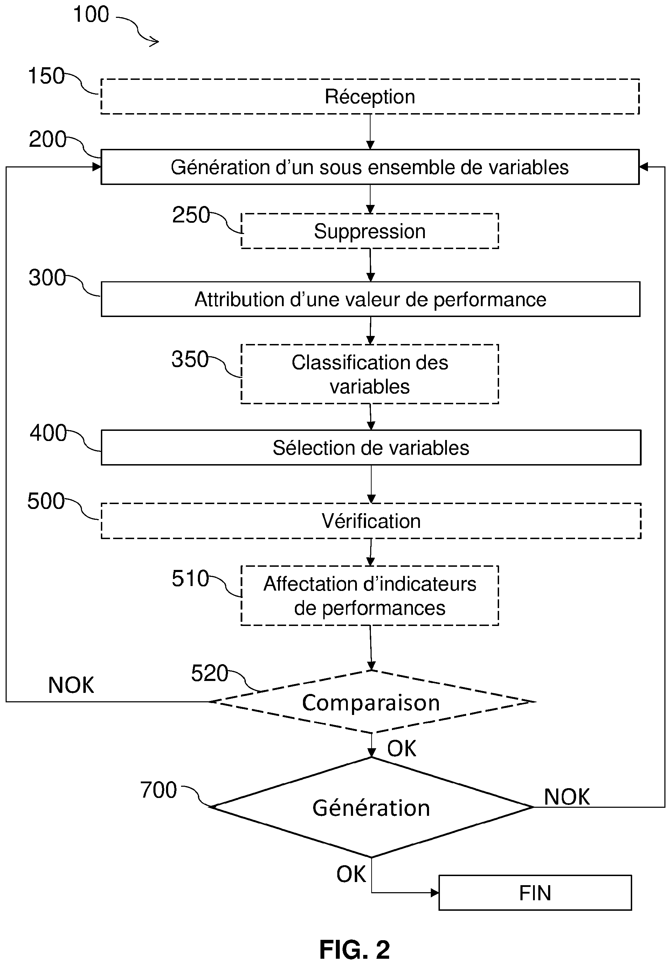

Comme cela est illustré en figure 2, un procédé 100 d'identification de variables pertinentes dans un jeu de données peut comporter une étape préalable, à l'étape de génération 200 d'un sous ensemble de variables, de réception 150 de la pluralité de variables formant un espace de représentation en fonction d'une requête déterminée. En effet, il est prévu que le dispositif informatique comprenant le module de sélection de variables puisse émettre des requêtes vers une infrastructure informatique tel que des infrastructures de calcul haute performance, lesdites requêtes visant à récupérer un jeu de données comprenant une pluralité de sous-ensembles de données de l'architecture informatique.

En particulier, un procédé 100 d'identification de variables pertinentes dans un jeu de données comprend **une étape de génération 200 d'un sous ensemble de variables à partir de l'ensemble de variables, par le module de sélection de variables.**

Une telle étape permet de sélectionner un sous-ensemble de variables considérées par le module de sélection de variables comme pertinentes, à partir du jeu de données utilisé comme entrée et constitué par l'ensemble initial de variables formant un espace de représentation et un ensemble de données d'apprentissage pour un problème considéré. Comme décrit précédemment en lien avec les infrastructures informatiques de calcul haute performance, le jeu de données peut comprendre une multitude de variables décrivant l'état actuel de l'infrastructure informatique de calcul haute performance à partir desquelles il pourrait être possible de détecter une anomalie future susceptible de générer une perturbation des services fournis par l'infrastructure informatique de calcul haute performance.

Pour générer 200 un sous ensemble de variables, le module de sélection de variables peut être configuré pour mettre en œuvre un algorithme de type « filtre » bien connu de l'homme du métier, la sélection de variables peut être vue comme un problème de recherche où chaque état de l'espace de représentation spécifie un sous-ensemble possible de variables. Le passage de l'état initial à l'état final peut être schématisé par un graphe partiellement ordonné où chaque état enfant possède un attribut de plus que ses parents.

Les méthodes de sélection de variables utilisent l'ordre partiel des variables pour organiser la recherche du sous-ensemble optimal de variables. Cet ordre partiel correspond à l'agencement des variables dans le temps, c'est à dire à leur utilisation lors de l'étape de génération 200 d'un sous ensemble de variables.

Pour cela le module de sélection de variables peut implémenter les techniques bien connues de « forward selection », de « backward elimination » ou les méthodes bidirectionnelles.

Afin de diminuer la taille de l'espace de représentation des données et ainsi d'optimiser le coût en ressources matériels et logiciels, de diminuer le temps pour mettre en œuvre les étapes du procédé selon l'invention, le procédé comprend une étape de suppression 250 des variables du sous ensemble de variable généré lorsque les variables sont redondantes. L'étape de suppression 250 des variables peut avantageusement être mise en œuvre lors de la génération 200 d'un sous ensemble de variables ou encore lors de la sélection 400 de variables.

Pour chaque sous-ensemble de variables générée 200, un procédé conforme à l'invention comprend une étape de calcul 300 d'une valeur de performance à chaque variable du sous ensemble de variables généré, par le module de sélection de variables.

Pour cela, le module de sélection de variables est configuré pour mettre en œuvre des fonctions d'évaluation permettant de mesurer la capacité d'une variable ou d'un ensemble de variables exogènes, c'est-à-dire ne dépendant pas d'au moins une autre variable du sous-ensemble de variables, à distinguer les classes de la variable endogène, c'est-à-dire d'une variable dépendante à au moins une autre variable du sous-ensemble de variables.

Afin d'évaluer la performance de chaque variable, le module de sélection de variables peut être configuré pour mettre en œuvre des fonctions d'évaluation, comme défini par Dash and Liu - Consistency-based search in feature selection ; Elsevier, Artificial Intelligence Volume 151, Issues 1-2, December 2003, Pages 155-176, le module de sélection de variables est ainsi configuré pour calculer des indicateurs de performance pour chaque variable.

En outre, afin de sélectionner les variables les plus pertinentes, l'étape de calcul d'une valeur de performance 300 de chaque variable du sous ensemble de variables généré, par le module de sélection de variables, peut comprendre la classification 350 des variables à partir de leur(s) valeur(s) de performance, de telles valeurs de performance peuvent notamment correspondre au :
- critère d'information, décrivant la quantité d'information apportée par une variable sur la variable endogène. La variable, ayant le gain d'information le plus élevé, sera préférée aux autres variables. Le gain d'information est la différence entre l'incertitude *a priori* et l'incertitude *a posteriori.*
- critère de distance, prenant en considération le pouvoir discriminant d'une variable.
- critère d'indépendance, regroupant toutes les mesures de corrélation ou d'association. Il permet de calculer le degré avec lequel une variable exogène est associée à une variable endogène.
- critère de consistance, lié au biais des variables minimum. Ces mesures recherchent l'ensemble de variables le plus petit qui satisfait un pourcentage d'inconsistance minimum défini par l'utilisateur. Deux objets sont inconsistants si leurs modalités sont identiques et s'ils appartiennent à deux classes différentes. Ces mesures peuvent permettre de détecter les variables redondantes.
- critère de précision, utilisant un classifieur comme fonction d'évaluation. Le classifieur choisit, parmi tous les sous-ensembles de variables, celui qui est à l'origine de la meilleure précision prédictive.

Une fois les variables évaluées, le procédé selon l'invention comprend une étape de sélection 400 d'au moins une variable pertinente par application d'un algorithme génétique, ou par application de techniques de sélection.

En effet, le module de sélection de variables peut être configuré pour mettre en œuvre une ou plusieurs techniques de sélection de variables et pour sélectionner un nombre prédéterminé de variables après avoir mis en œuvre l'un ou les algorithmes de sélection pour chaque variable du sous-ensemble de variables.

A titre d'exemple, le module de sélection de variables peut être configuré pour mettre en œuvre l'application 450 de techniques de sélection tels que les algorithmes de tests de statistiques suivants :
> La sélection 410 de variables univariées :
   - Par l'analyse de la variance ou « ANOVA ».
   - Par un test de l'information mutuelle entre deux variables aléatoires. L'information mutuelle mesure la dépendance entre les variables. Elle est égale à zéro si et seulement si les variables sont indépendantes, et prend des valeurs plus élevées s'il y a dépendance. La fonction repose sur des méthodes non paramétriques basées sur l'estimation de l'entropie à partir des distances de l'algorithme des K plus proches voisins ou « K-Nearest Neighbors ».
   - Par un test du X² ou « Chi 2 », qui mesure la dépendance entre les variables stochastiques, l'utilisation de cette fonction « supprime » les variables les plus susceptibles d'être indépendantes de la variable à prédire (classes) et donc peu pertinentes pour la classification.
> La sélection 420 de variables multivariées :
   - Régression linéaire par le calcul de la corrélation entre chacune des variables et la variable à prédire et par la conversion en F-valeur puis en P-valeur.
> La sélection 430 de variables par élimination récursive :
   - A partir d'un estimateur externe qui attribue des poids aux variables (par exemple, les coefficients d'un modèle linéaire type régression ou SVM), l'élimination récursive des variables consiste à sélectionner les variables en considérant récursivement de plus en plus petits ensembles de variables jusqu'à avoir un ensemble à k variables souhaitées. Tout d'abord, l'estimateur est entraîné sur un jeu initial de variables. L'importance de chaque variable est obtenue au moyen d'un attribut relatif soit au coefficient, soit à l'importance de la variable même. Ensuite, les variables les moins importantes sont éliminées de l'ensemble de variables. Le processus est ensuite répété jusqu'à ce que l'élimination des variables de moindre importance aboutisse à l'obtention d'un ensemble comprenant le nombre de variable à sélectionner souhaité.

En outre, l'étape de sélection 400 d'au moins une variable pertinente peut consister en l'application d'un algorithme génétique comprenant une étape de génération d'une population initiale de variables en se basant sur des corrélations calculées à partir du coefficient de Pearson ou du coefficient de Spearman.

Pour cela, dans un mode de réalisation particulier d'un procédé conforme à l'invention, l'étape de sélection 400 d'au moins une variable par application d'un algorithme génétique peut comprendre :
- une étape de calcul 630 d'une valeur d'adéquation pour chaque variable du sous ensemble de variable généré,
- une étape de génération 640 d'une nouvelle variable comprenant
   - une étape de sélection 641 de variable à partir d'une fonction de sélection prédéfinie,
   - une étape de transformation 642 des variables sélectionnées en fonction d'une fonction de transformation prédéfinies,
- une étape de calcul 650 d'une valeur d'adéquation pour la nouvelle variable générée,
- une étape de comparaison 660 de la valeur d'adéquation de la nouvelle variable générée avec les valeurs d'adéquation de chaque variable du sous ensemble de variable généré comprenant :
   - une nouvelle étape de génération 670 d'un nouveau sous ensemble de variables lorsque la valeur quantitative de la variable sélectionnée est inférieure à une valeur seuil prédéterminée, ladite valeur quantitative correspondant à la valeur d'adéquation de la nouvelle variable générée et la valeur seuil prédéterminée correspondant à la valeur d'adéquation la plus faible des variables du sous ensemble généré.
De manière avantageuse, l'étape de sélection 400 d'au moins une variable par application d'un algorithme génétique peut comprendre au préalable :
- une étape de calcul 610 de corrélation entre les variables du sous ensemble de variable généré,
- une étape d'encodage 620 des variables en fonction de la corrélation calculée entre les variables du sous ensemble de variables générées.

Afin de s'assurer que le sous-ensemble de variables sélectionné comprend bien des variables permettant d'interpréter le jeu de données et par voie de conséquence des variables adaptées à la génération d'un modèle de prédiction, un procédé conforme à l'invention peut comprendre une étape de vérification 500 de la pertinence de variables identifiées, par le module de sélection de variable, comprenant l'affectation 510 d'indicateurs de performances.
Plus particulièrement, le modèle de régression linéaire utilisé pourra être évaluer en déterminant un ou plusieurs indicateurs de performance tels qu'à titre d'exemples non limitatifs :
- La déviation absolue moyenne (MAE, « Mean Absolute Error » selon une terminologie anglo-saxonne). La déviation absolue d'un élément d'un ensemble de données est la différence absolue entre cet élément et un point donné. La déviation absolue moyenne d'un ensemble est quant à elle la moyenne (ou valeur prévue) des déviations absolues par rapport à la moyenne.
- L'erreur quadratique moyenne (RMSE, « Root Mean Squared Error » selon une terminologie anglo-saxonne) qui permet de mesurer les résidus entre les valeurs prédites et observées par un modèle ou un classifieur. L'erreur quadratique moyenne représente la racine carrée du deuxième moment d'échantillon des différences entre les valeurs prédites et les valeurs observées ou la moyenne quadratique de ces différences.
- Le coefficient de détermination, noté R², qui mesure la qualité de la prédiction d'une régression linéaire.

En outre, l'étape de vérification 500 peut comprendre la comparaison 520 des indicateurs de performances affectés aux variables identifiées avec des indicateurs de performances définis. Plus particulièrement, les indicateurs de performance définis peuvent correspondre à des valeurs seuils en dessous desquelles les variables identifiées du sous-ensemble de variables sont considérées comme inadaptées 520 NOK pour générer un modèle de prédiction. Dans ce cas-là, l'étape de génération 200 d'un sous ensemble de variables est réitérée.

Afin d'éviter l'obsolescence du modèle de prédiction basé sur l'utilisation de variables pertinentes préalablement identifiées, un procédé 100 selon l'invention comprend une nouvelle étape de génération 700 d'un nouveau sous ensemble de variables lorsque la comparaison de la valeur de performance de la variable sélectionnée est inférieure 700 NOK à une valeur seuil prédéterminée. En effet, dans le cadre d'une infrastructure informatique de calcul haute performance, il est fréquent que celle-ci évolue, que cela soit par l'ajout de serveurs informatique ou plus généralement de matériels impliquant de nouvelles variables ayant un impact sur la survenue d'une anomalie, il convient ainsi de prendre en considération ces nouveaux paramètres afin d'ajuster le modèle de prédiction, lors de la dégradation de la valeur de performance d'une variable, pour éviter la défaillance des services fournis par l'architecture informatique de calcul haute performance.

## Revendications

1. Procédé (100) d'identification de variables pertinentes dans un jeu de données comportant une pluralité de sous-ensembles de données mis en œuvre par un dispositif informatique, chacun des sous-ensembles de données correspondant à une variable de façon à former un ensemble de variables, ledit procédé comprenant :
- une étape (200) de génération d'un sous ensemble de variables à partir de l'ensemble de variables, par un module de sélection de variable,
- une étape (300) de calcul d'une valeur de performance à chaque variable du sous ensemble de variables généré, par le module de sélection de variables,
- une étape (400) de sélection d'au moins une variable pertinente par application d'un algorithme génétique, ou par application de techniques de sélection, et
- une nouvelle étape (700) de génération d'un nouveau sous ensemble de variables lorsque la valeur de performance de la variable sélectionnée est inférieure à une valeur seuil prédéterminée.

2. Procédé selon la revendication 1, **caractérisé en ce que** l'étape (200) de génération d'un sous ensemble de variables comprend une étape (150) préalable de réception de la pluralité de variables formant un espace de représentation en fonction d'une requête déterminée.

3. Procédé selon la revendication 1 ou 2, **caractérisé en ce que** le procédé comprend une étape (500) de vérification de la pertinence de variables identifiées, par le module de sélection de variable, comprenant l'affectation (510) d'indicateurs de performances.

4. Procédé selon la revendication 3, **caractérisé en ce que** l'étape (500) de vérification comprend en outre la comparaison (520) des indicateurs de performances affectés aux variables identifiées avec des indicateurs de performances définis.

5. Procédé selon l'une quelconque des revendications 1 à 4, **caractérisé en ce que** l'étape (400) de sélection d'au moins une variable par application d'un algorithme génétique comprend
- une étape (630) de calcul d'une valeur d'adéquation pour chaque variable du sous ensemble de variable généré,
- une étape (640) de génération d'une nouvelle variable comprenant
- une étape (641) de sélection de variable à partir d'une fonction de sélection prédéfinie,
- une étape (642) de transformation des variables sélectionnées en fonction d'une fonction de transformation prédéfinies,
- une étape (650) de calcul d'une valeur d'adéquation pour la nouvelle variable générée,
- une étape (660) de comparaison de la valeur d'adéquation de la nouvelle variable générée avec les valeurs d'adéquation de chaque variable du sous ensemble de variable généré comprenant :
- une nouvelle étape (670) de génération d'un nouveau sous ensemble de variables lorsque la valeur quantitative de la variable sélectionnée est inférieure à une valeur seuil prédéterminée, ladite valeur quantitative correspondant à la valeur d'adéquation de la nouvelle variable générée et la valeur seuil prédéterminée correspondant à la valeur d'adéquation la plus faible des variables du sous ensemble généré.

6. Procédé selon la revendication 5, **caractérisé en ce que** l'étape (400) de sélection d'au moins une variable par application d'un algorithme génétique comprend au préalable :
- une étape (610) de calcul de corrélation entre les variables du sous ensemble de variable généré,
- une étape (620) d'encodage des variables en fonction de la corrélation calculée entre les variables du sous ensemble de variables générées.

7. Procédé selon l'une quelconque des revendications 1 à 4, **caractérisé en ce que** l'étape (400) de sélection de variables par application (450) de techniques de sélection comprend :
- la sélection (410) de variable univariée, ou
- la sélection (420) de variable multivariée, ou
- la sélection (430) de variable par élimination récursive.

8. Procédé selon l'une quelconque des revendications 1 à 7, **caractérisé en ce que** le procédé comprend une étape (250) de suppression des variables du sous ensemble de variable généré lorsque les variables sont redondantes.

9. Procédé selon l'une quelconque des revendications 1 à 8, **caractérisé en ce que** l'étape (300) d'attribution d'une valeur de performance de chaque variable du sous ensemble de variables généré, par le module de sélection de variables, comprend la classification (350) des variables à partir de la valeur de performance.

10. Procédé selon l'une quelconque des revendications 1 à 9, **caractérisé en ce que** le jeu de données est émis par des fournisseurs de données comportant des capteurs de production industrielle et **en ce que** la variable pertinente sélectionnée est utilisée par un modèle d'apprentissage entrainé pour la surveillance d'un processus industriel.

11. Procédé selon la revendication 10, **caractérisé en ce que** les capteurs de production industrielle comportent : des objets connectés, des capteurs machines, capteurs d'environnement et/ ou des sondes informatiques.

12. Procédé selon les revendications 10 ou 11, **caractérisé en ce que** le processus industriel est sélectionné parmi : un processus de production agroalimentaire, un processus de production manufacturière, un processus de synthèse chimique, un processus de conditionnement ou un processus de surveillance d'une infrastructure informatique.

13. Procédé selon l'une quelconque des revendications 10 à 12, **caractérisé en ce que** la surveillance du processus industriel correspond à la surveillance de la sécurité du processus industriel et comporte en particulier une maintenance prédictive, une détection de défaillance, une détection de fraude, et/ou une détection de cyberattaque.

14. Système (10) d'identification de variables pertinentes pour un jeu de données, mis en œuvre par un dispositif informatique, lesdites variables étant issues d'une pluralité de variables mise en jeu au cours d'un traitement du jeu de données, ledit système comprenant un module de sélection (1) de variable configuré pour :
- Générer un sous ensemble de variables à partir de la pluralité de variables mis en jeu au cours du traitement du jeu de données,
- Attribuer une valeur de quantification de chaque variable du sous ensemble de variables généré,
- Sélectionner des variables pertinentes par application d'un algorithme génétique, ou par application de techniques de sélection,
- Générer un nouveau sous ensemble de variables lorsque la valeur quantitative de la variable sélectionnée est inférieure à une valeur seuil prédéterminée.

15. Module (1) de sélection de variables pour l'identification de variables pertinentes pour un jeu de données, mis en œuvre par un dispositif informatique, lesdites variables étant issues d'une pluralité de variables mise en jeu au cours d'un traitement du jeu de données, ledit module de sélection de variable étant configuré pour :
- Générer un sous ensemble de variables à partir de la pluralité de variables mis en jeu au cours du traitement du jeu de données,
- Attribuer une valeur de quantification de chaque variable du sous ensemble de variables généré,
- Sélectionner des variables pertinentes par application d'un algorithme génétique, ou par application de techniques de sélection,
- Générer un nouveau sous ensemble de variables lorsque la valeur quantitative de la variable sélectionnée est inférieure à une valeur seuil prédéterminée.
